# EUROPEAN PATENT APPLICATION

(11) **EP 2 101 185 A2**
(43) Date of publication of application: **16.09.2009**
(21) Application number: 08158344.5
(22) Date of filing: 16.06.2008
(51) Int. Cl.: G01S 1/00, G06F 17/30

(54) **Multimedia device generating media file with geographic information and method of playing media file with geographic information**

(30) Priority: 14.03.2008 TW 97109048
(71) Applicant: Avid Electronics Corp., Science-based industrial Park Hsunchu (TW)
(72) Inventor: Liu Vicent, Hsinchu (TW)
(74) Representative: Dossmann, Gérard

(57) **Abstract**

A multimedia device (10) that generates media files and a method of playing the media files. Since the multimedia device (10) has a globe positioning system (GPS) receiving unit (14), the corresponding geographic information is obtained and then the media data and the corresponding geographic information are processed to one media file. Therefore, the playing method uses the geographic information of the media files from the multimedia device (10) to manage and play the media files having same geographic information.

## Description

### 1. Field of the Invention

The present invention relates to a multimedia device for generating different media files, and more particularly to a multimedia device that generates media files, each of which has a specific geographic information and a method of playing the media files with the geographic information.

### 2. Description of Related Art

As the electrical technology develops quickly, many electrical devices are made in small scale for portable. In addition, the semiconductor technology and data compressing technology quickly develop as well, so the more electrical devices are further made in small size.

In addition, many conventional analog electronic devices have been replaced by digital electronic devices. For example, a conventional camera uses films to extract and keep picture but the films do not recycle. The digital camera uses memory card to store the picture. Since the memory card provides large data capacity, the digital camera also has a taking video capability.

Based on the foregoing description, it is possible to integrate various functions in a digital device, such as an audio recording function and/or audio and video recording and playing function. Therefore, if the digital device has more functions, a value of the digital device is higher.

The main objective of the present invention is to provide a multimedia device that generates media files and each of which has its geographic information. The multimedia device has:
a media signal extracting unit extracting an analog media signal including audio signal and/or video signal and converting the analog media signal to media data;
a GPS receiving unit receiving satellite signals each includes a geographical information and outputting the geographical information of the received satellite signals;
a digital processing unit electronically connected to the media signal extracting unit and the GPS receiving unit to obtain the media data and the geographical information, wherein the digital processing unit has a generating procedure to process the media data and the corresponding geographical information and then generate a media file, so the media file has the media data and the corresponding geographical information;
a memory unit electronically connected to the digital processing unit to store the media data and the geographical information;
a media file output unit electronically connected to the digital processing unit to output the media files; and
a media file playing unit electronically connected to the digital processing unit, so the digital processing unit controls the media file playing unit to play the media files.

The present invention is also to provide a method of playing media file with geographic information. The playing method has steps of (a) loading a map; (b) obtaining the media files each has geographical information; (c) classing the media files to different documents according to geographical information; (d) marking locations on the map corresponding geographical information of the documents; (e) providing a media file playing interface to select the media files; and (f).playing the selected media files.

Other objectives, advantages and novel features of the invention will become more apparent from the following detailed description when taken in conjunction with the accompanying drawings.

### IN THE DRAWINGS

Fig. 1 is a functional block diagram of a first embodiment of a multimedia device in accordance with the present invention;
Fig. 2 is a functional block diagram of a second embodiment of a multimedia device in accordance with the present invention;
Fig. 3 is a flow chart of a playing method in accordance with the present invention;
Fig. 4 is a schematic diagram of a configuration of three different multimedia devices connected to a computer;
Fig. 5A is a tree diagram of media files generated by multimedia device in accordance with the present invention;
Fig. 5B is another tree diagram of the media files generated by multimedia device in accordance with the present invention;
Fig. 6A is a diagram of a media file playing interface performed by the computer;
Fig. 6B is a diagram of another media file playing interface performed by the computer; and
Fig. 7 is a flow chart of a method of processing media file.

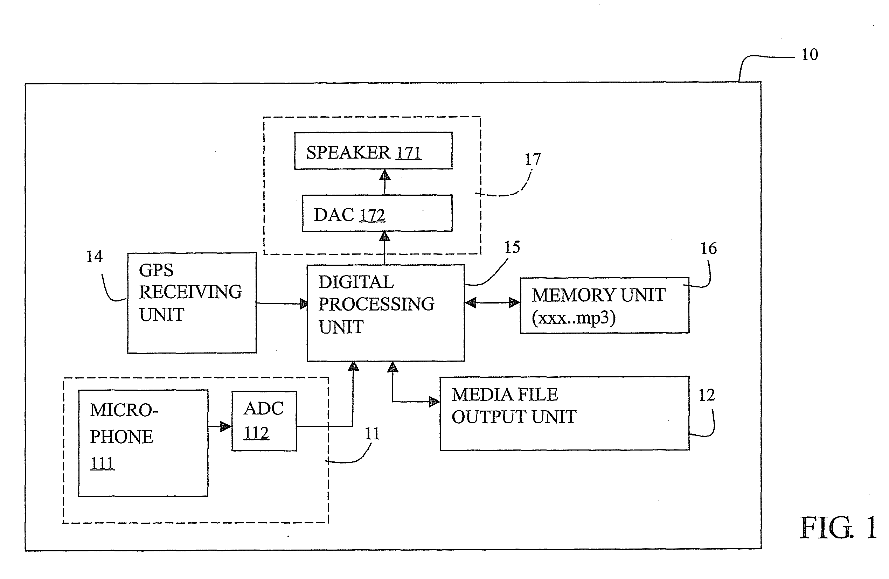

With reference to Fig. 1, a first embodiment of a multimedia device (10) has a media signal extracting unit (11), a globe positioning system (GPS) receiving unit (14), a digital processing unit (15), a memory unit (16), a media file output unit (12) and a media playing unit (17).

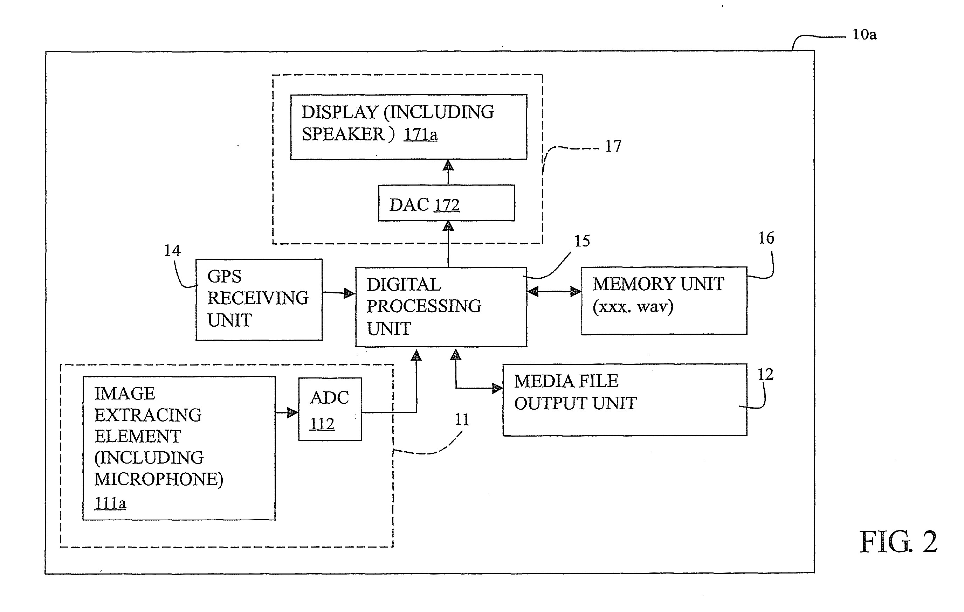

The media signal extracting unit (11) is used to extract analog media signal including audio signal and/or video signal and then converts the analog media signal to media data. In the first embodiment, the media signal extracting unit (11) has a microphone (111) and an analog to digital converter (ADC) (112) electronically connected to the microphone (111) and converting the audio signal from the microphone to digital audio signal. With further reference to Fig. 2, in a second embodiment of the multimedia device (10a), the media signal extracting unit (11) has an image capture element (111a) with a microphone and an analog to digital converter (ADC) (112). The ADC is electronically connected to the image capture element (111a) and the microphone and converting an audio and video signal to audio and video data.

The GPS receiving unit (14) is used to receive satellite signals including geographical information. The GPS receiving unit (14) outputs the geographical coordinates and times. The geographical information at least has geographical coordinate and time.

The digital processing unit (15) is electronically connected to the ADC (112) of the media signal extracting unit (11) and the GP S receiving unit (14) to obtain the media data and the geographical information. The digital processing unit (15) processes the media data and the corresponding geographical information and then generates a media file. Therefore, the media file has the media data and the geographical information.

The memory unit (16) is electronically connected to the digital processing unit (15) to store the media data and the geographical coordinates and times of the geographical information. The geographical coordinates and times may be stored in a property column of the corresponding digital file.

The media file output unit (12) is electronically connected to the digital processing unit (15) to output the media file. The media file may be a digital audio format (ex: xxx.mp3), a digital image format (ex: xxx.jpg) or a digital audio and video format (ex: xxx.avi). The media file output unit (12) may be a computer connector (such as an USB port, an RJ45 or RS-232) or a wireless computer connector (such as an IR communicating port, a bluetooth communicating port).

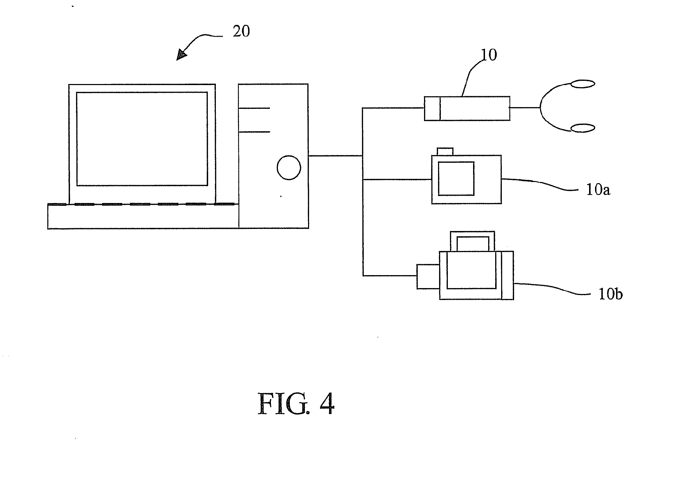

The media file playing unit (17) is electronically connected to the digital processing unit (15), so the digital processing unit (15) controls the media file playing unit (17) to play the media files. In the first embodiment, the media file playing unit (17) has a speaker (171) and a digital to analog converter (DAC) (172) electronically connected between the speaker (171) and the digital processing unit (15). Therefore, the first embodiment of the multimedia device is used as a MP3 player. With further reference to Figs. 2 and 4, in the second embodiment, the media file playing unit (17) has a display (171a) with a speaker and a digital to analog converter (172) electronically connected between the display (171a) and the digital processing unit (15). Therefore, the second embodiment of the multimedia device (10a, 10b) is used as a digital camera or a digital video camera.

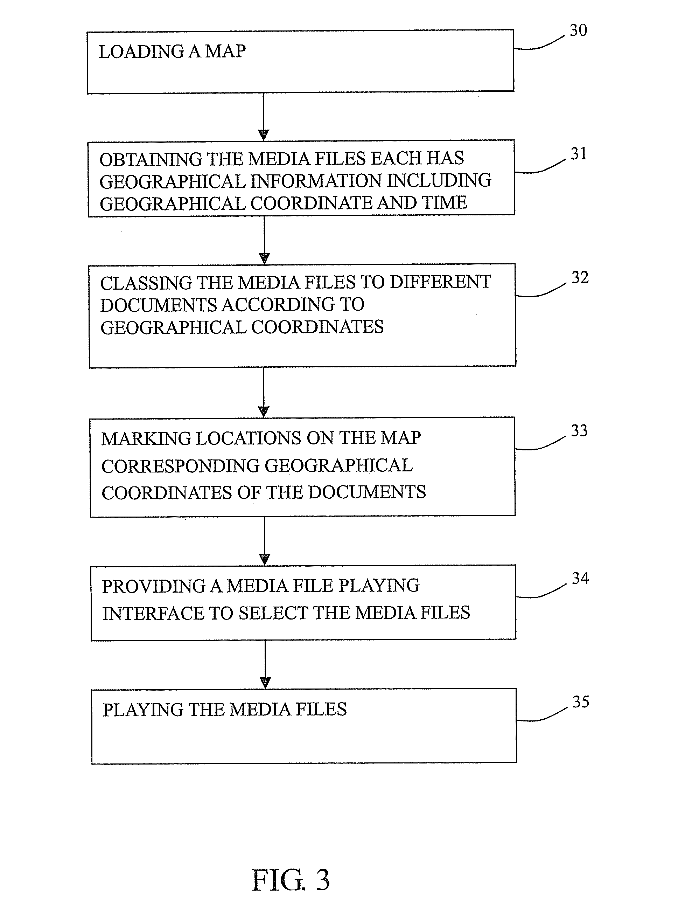

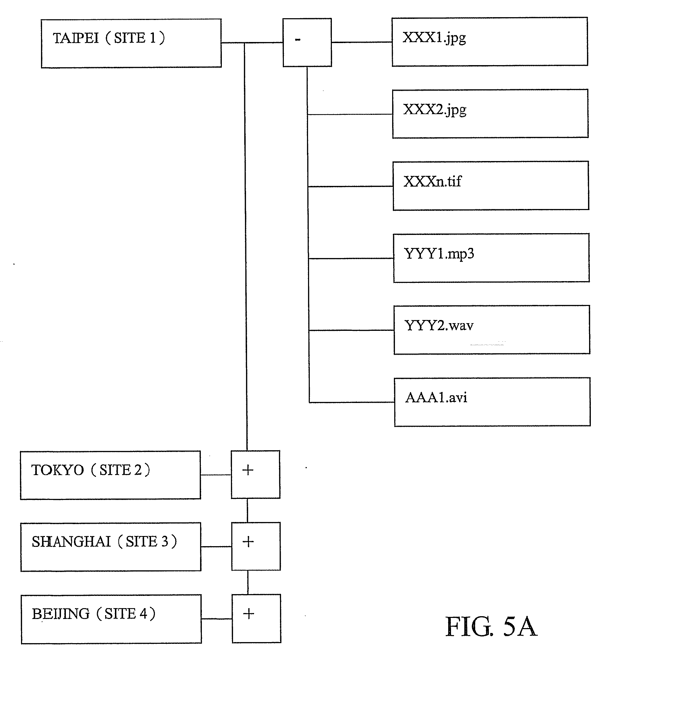

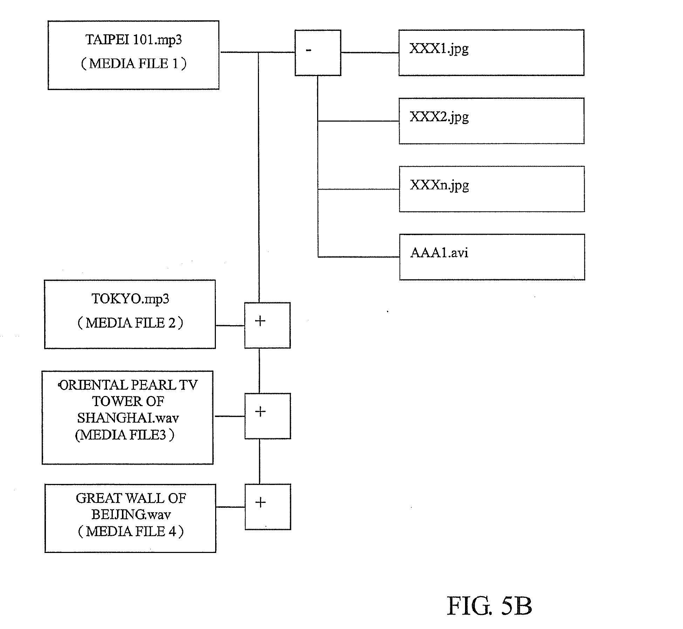

With reference to Figs. 3, 4 and 5A, a method of playing media file with geographic information in accordance with the present invention is implemented by a computer (20) so the computer (20) executes the playing method. First, the computer (20) loads a map and obtains media files from the multimedia device (10, 10a, 10b), so each media file has a specific geographical coordinates and times. The computer (20) further classes the media files to different documents according to the geographical coordinates. That is, with reference to Fig. 5A, the media files having the same geographical coordinates are classed into one document. Therefore, the computer (20) builds a Taipei document, a Tokyo document, a Shanghai document and a Beijing document. For example, in Taipei document there are many media files and each media file has the corresponding geographical coordinate of Taipei site. The media files may be in different file formats, such as picture file format (xxx.jpg), audio file format (xxx.mp3) or audio and video file format (xxx.avi). In addition, with further reference to Fig. 5B, the computer (20) may also establish a connection with the media files having the same geographical coordinates. For example, the computer (20) obtains a digital audio file named Taipei 101. mp3. The computer (20) reads the geographical coordinate of the Taipei 101. mp3, and then checks other media files in different file formats. If other media files (xxx1.jpg)(xxx2.jpg)(xxxn.jpg)(AAA1.jpg) have the same geographical coordinate of the Taipei 101. mp3, a connection is established between the Taipei 101. mp3 and other media files.

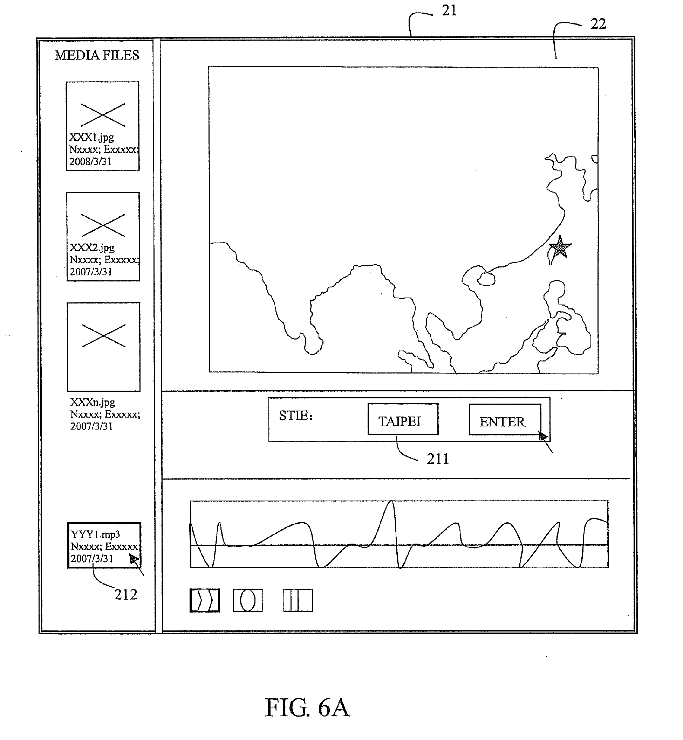

With further reference to Fig. 6A, the computer (20) further provides a media file playing interface (21) having a site selecting option (211) and/or a media file selecting option (212). When a user uses the site selecting option (211), a specific site is input and the media file playing interface (21) selects one specific document matched the site. And then media file playing interface (21) lists the media files of the selected document to play. In addition, when the user also uses the media file selecting option (212) to select a specific media file, the media file playing interface (21) reads all media file related to the selected media file and then play all media files.

Based on the forgoing description, with further reference to Fig. 3, the playing method has steps of (a) loading a map (30); (b) obtaining the media files each has geographical information including geographical coordinate and time (31); (c) classing the media files to different documents according to geographical coordinates (32); (d) marking locations on the map (22) corresponding geographical coordinates of the documents (33); (e) providing a media file playing interface to select the media files (34); and (f).playing the media files (35).

With reference to Fig. 6A, the computer performs a media file playing interface (21). The media file playing interface (21) displays the map (22) and lists media files. The computer may link to Internet to further link the Google MapTM website and displays the globe map on the media file playing interface (21). Since the media file playing interface (21) has the site selecting option (211), the user inputs a specific site, such as Taipei, Tokyo Shanghai document or Beijing to select a corresponding document. The media files of the selected document are listed on the media file playing interface and then played in sequence.

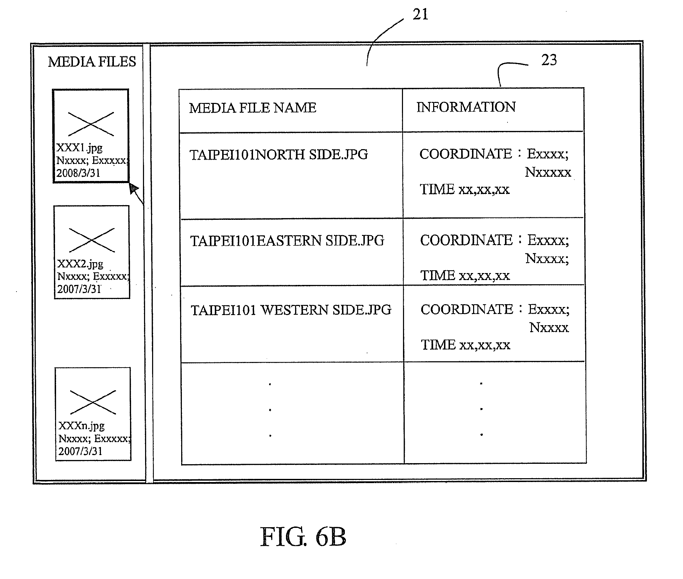

With reference to Fig. 6B, the computer also provides a file information management function. When the user opens the management function an Exchangeable Image File Format (EXIF) list (23) is shown so the user amends the media information of each media file of the EXIF list.

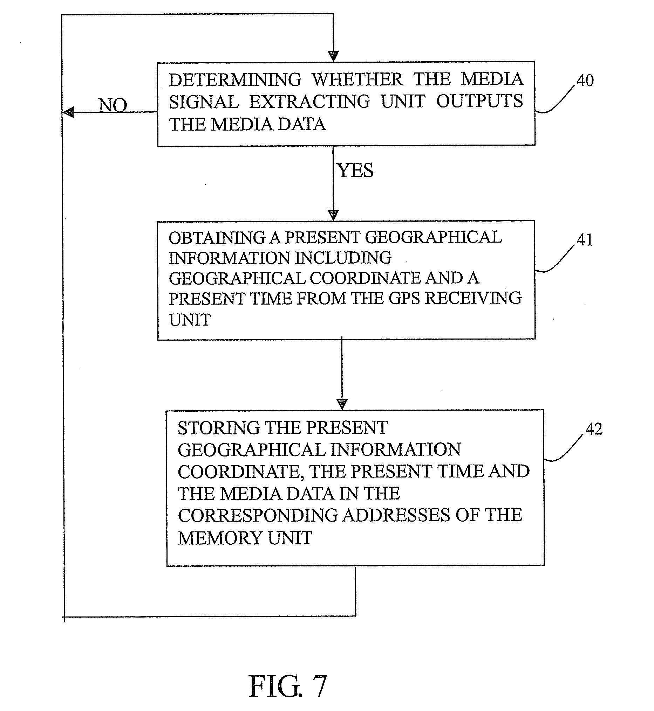

With reference to Figs.1 and 7, a digital processing unit (15) further has a procedure of generating a media file having geographical coordinate. The generating procedure has steps of:
(a) determining whether the media signal extracting unit outputs the media data (40), wherein if a determined result is negative, the step (a) is executed continually until the media data is output, but if the determined result is positive, go to a next step;
(b) obtaining a present geographical information including geographical coordinate and a present time from the GPS receiving unit (41); and
(c) storing the present geographical information coordinate, the present time and the media data in the corresponding addresses of the memory unit (42).

In the step (c), the present geographical coordinate and the present time may be stored in a property column of the media data, so another specific file format is not required to package the present geographical coordinate and the present time. Therefore, the computer downloads the media files and the corresponding the geographical coordinates and the times at the same time.

Based on the foregoing description, the present invention provides a multimedia device to generate media files with the corresponding geographical coordinates and times. Further, the playing method in accordance with the present invention uses the media files with the corresponding geographical coordinates and times to manage media files effectively and play media files in sequence according to the same geographical coordinate. Therefore, the user easily to recollect the past happened at a specific site.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A multimedia device (10) comprising:
a media signal extracting unit (11) extracting an analog media signal including audio signal and/or video signal and converting the analog media signal to media data;
a GPS receiving unit (14) receiving satellite signals each includes a geographical information and outputting the geographical information of the received satellite signals;
a digital processing unit (15) electronically connected to the media signal extracting unit (11) and the GPS receiving unit (14) to obtain the media data and the geographical information, wherein the digital processing unit (15) has a generating procedure to process the media data and the corresponding geographical information and then generate a media file, so the media file has the media data and the corresponding geographical information;
a memory unit (16) electronically connected to the digital processing unit (15) to store the media data and the geographical information;
a media file output unit (12) electronically connected to the digital processing unit (15) to output the media files; and
a media file playing unit (17) electronically connected to the digital processing unit (15), so the digital processing unit (15) controls the media file playing unit (17) to play the media files.

2. The multimedia device as claimed in claim 1, wherein the generating procedure of the digital processing unit (15) comprises steps of:
(a) determining whether the media data extracting unit (11) outputs the media data; if a determined result is negative, the step (a) is executed continually until the media data is output; but if the determined result is positive, go to a next step;
(b) obtaining a present geographical information from the GPS receiving unit (14); and
(c) storing the present geographical information and the media data in corresponding addresses of the memory unit (16).

3. The multimedia device as claimed in claim 2, wherein in the step (c) of the generating procedure the present geographical information is further stored in a property column of the media file.

4. The multimedia device as claimed in claim 1, wherein the geographical information of each media file comprises geographical coordinate and time.

5. The multimedia device as claimed in claim 2, wherein the geographical information of each media file comprises geographical coordinate and time.

6. The multimedia device as claimed in claim 5, wherein
the media signal extracting unit (11) comprises:
a microphone (111); and
an analog to digital converter (112) electronically connected to the microphone (111) and the digital processing unit (15); and
the media file playing unit (17) comprises:
a speaker (171); and
a digital to analog converter (172) electronically connected to the speaker and the digital processing unit (15).

7. The multimedia device as claimed in claim 5, wherein
the media signal extracting unit (11) comprises:
an image capture element (111a);
an microphone; and
an analog to digital converter (112) electronically connected to the image capture element (111a), the microphone the digital processing unit (15); and
the media file playing unit (17) comprises:
a display (171a) with a speaker; and
a digital to analog converter (172) electronically connected between the display (171a) and the digital processing unit (15).

8. The multimedia device as claimed in claim 5, wherein the media file output unit (12) is a computer connector or a wireless computer connector.

9. A method of playing media file, comprising steps of:
(a) loading a map (30);
(b) obtaining the media files each has geographical information (31);
(c) classing the media files to different documents according to geographical information (32);
(d) marking locations on the map corresponding geographical information of the documents (33);
(e) providing a media file playing interface (21) to select the media files (34); and
(f) playing the selected media files (35).

10. The playing method as claimed in claim 9, wherein the geographical information comprises geographical coordinate and time.

11. The playing method as claimed in claim 9, wherein the geographical information comprises geographical coordinate and time, and the documents of the step (c) are generated according to the geographical coordinates of the media files.

12. The playing method as claimed in claim 11, wherein each document comprises the media files in different file formats.

13. The playing method as claimed in claim 10, wherein the media file playing interface (21) comprises a site selecting option to select one of the documents to play the media files of the selected document according to the corresponding geographical coordinate.

14. The playing method as claimed in claim 11, wherein the media file playing interface (21) further comprises a media file selecting option to select one of the media files, wherein other media files having the geographical coordinates being same as the geographical coordinate of the selected media file are also selected.
